# EUROPEAN PATENT SPECIFICATION

(11) **EP 4 224 052 B1**
(45) Date of publication and mention of the grant of the patent: **11.12.2024**
(21) Application number: 23153680.6
(22) Date of filing: 27.01.2023
(51) Int. Cl.: F16L 55/00

(54) **METHOD OF CONTROLLING HOSES AND PIPES UNDER PRESSURE**
VERFAHREN ZUR KONTROLLE VON UNTER DRUCK STEHENDEN SCHLÄUCHEN UND ROHREN
PROCÉDÉ DE CONTRÔLE DE FLEXIBLES ET DE TUYAUX SOUS PRESSION

(30) Priority: 03.02.2022 CA 3147569
(43) Date of publication of application: 09.08.2023
(73) Proprietor: Maxinus Inc., Leduc AB T9E 6L7 (CA)
(72) Inventor: UHRYN, Michael, Leduc, Alberta T9E 6L7 (CA)
(74) Representative: Appleyard Lees IP LLP

(56) References cited:
- EP-A1- 3 816 496
- GB-A- 2 370 869
- US-A1- 2013 341 470
- US-B2- 8 132 595

## Description

### Method of Controlling Hoses and Pipes Under Pressure

### FIELD OF THE DISCLOSURE

The present application relates generally to a method of controlling hoses and pies that become disconnected under pressure, more specifically it relates to a method of whip-checking.

### BACKGROUND

This section provides background information to facilitate a better understanding of the various aspects of the invention. It should be understood that the statements in this section of this document are to be read in this light, and not as admissions of prior art. GB2370869A, US8132595B2, US2013/0341470A1 and EP3816496A1 disclose examples of the related art.

When pipes and hoses are under pressure, an unintentional disconnect can have devastating consequences. There is a tendency for these hoes and pipes to whip around uncontrollably as pressure is released from them after a disconnect. A whipping hose or pipe can cause damage to personnel and equipment. Limiting movement of a disconnected hose or pipe may help to create a safer workplace for personnel and limit damage to nearby equipment.

### BRIEF SUMMARY

According to the invention as defined in claim 1, there is provided a method of controlling hoses and pipes. A hose or pipe is provided that has at least three segments. Each of the at least three segments has a pair of connection ends and a hollow body having a fluid channel. The at least three segments are attached by the pair of connection ends to create a joint such that the fluid channels of each of the at least three segments are in fluid communication. An elongate tether is positioned across each joint. Each of the elongate tethers has a first end and a second end. The first end of the elongate tether is attached to one of the segments adjacent the joint and the second end of the elongate tether is attached to an adjacent segment adjacent the joint. A further elongate tether is provided. The further elongate tether anchors at least one of the at least one elongate tethers to a first anchoring structure, the further elongate tether being attached to the at least one elongate tether and the first anchoring structure.

A zipper line is provided. The zipper line has a first end connected to the first anchoring structure and a second end connected to a second anchoring structure. The zipper line is attachable to each of the elongate tethers attached to the at least three segments. The zipper line is connected to the first anchoring structure independently of the further elongate tether connected to the first anchoring structure.

Preferred features of the invention are defined in the dependent claims.

In one embodiment, the zipper line is attached to each of the elongate tethers by carabiners.

In one embodiment, the zipper line is made up of at least two zipper segments.

In one embodiment, the at least two zipper line segments may be connected together in an end to end relation.

In another embodiment, the at least two zipper line segments have a first end connected to one of the elongate tethers and a second end connected to either the first anchoring structure, the second anchoring structure, or a different elongate tether positioned on the hose or pipe.

In one embodiment, the first end of each of the elongate tethers and the second end of each of the elongate tethers are positioned equidistant from the joint which the elongate tether crosses.

In one embodiment, the first end of each of the elongate tethers has a first loop.

In one embodiment, the first end of the elongate tether is attached to the hose or pipe by passing the second end of the elongate tether through the first loop to create a tightenable loop around the hose or pipe.

In one embodiment, the second end of the elongate tether has a second loop. The second loop may be an adjustable eye loop.

In one embodiment, the second loop is attached to the hose or pipe by wrapping the second loop around the hose or pipe and connecting the second loop back to the elongate tether.

In one embodiment, the zipper line is connected to the first anchoring structure and the second anchoring structure by a choke hitch or basket choke.

According to the invention, at least one of the elongate tethers is connected to the first anchoring structure.

In one embodiment, at least one of the elongate tethers is connected to the first anchoring structure using a choke hitch or a basket choke.

In one embodiment, at least one of the elongate tethers is connected to the second anchoring structure.

In one embodiment at least one of the elongate tethers is connected to the second anchoring structure using a choke hitch or a basket choke.

### BRIEF DESCRIPTION OF THE DRAWINGS

These and other features will become more apparent from the following description in which references are made to the following drawings, in which numerical references denote like parts. The drawings are for the purpose of illustration only and are not intended to in any way limit the scope of the invention to the particular embodiments shown.
FIG. 1 is a side elevation view of a zipper line and elongate tethers positioned on a hose or pipe.
FIG, 2 is a side elevation view of a zipper line having multiple segments.
FIG. 3 is a side elevation view of a method of anchoring the zipper line to an anchoring structure.
FIG. 4 is a side elevation view of an alternative method of anchoring the zipper line to an anchoring structure.
FIG. 5 is side elevation view of an elongated tether on a pipe.
FIG. 6 is a side elevation view of an elongated tether anchored to an anchoring structure using a choke hitch.
FIG. 7 is a side elevation view of an elongated tether anchored to an anchoring structure using a basket choke.

### DETAILED DESCRIPTION OF THE PREFERRED EMBODIMENTS

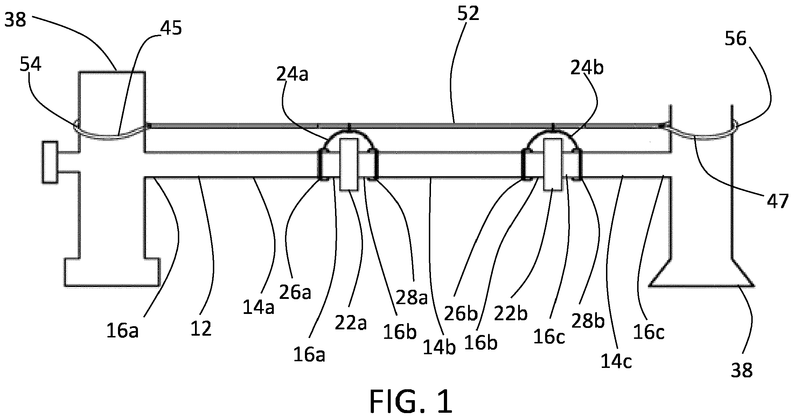

A method of controlling hoses and pipes under pressure will now be described with reference to FIG. 1 through FIG. 7.

Referring to **FIG. 1****,** a hose or pipe 12 that is made up of at least three segments 14a, 14b, and 14c. In the embodiment shown in **FIG. 1****,** three segments 14a, 14b, and 14c are illustrated, however it will be understood by a person skilled in the art that hose or pipe 12 may be made of any number of segments. The number of segments may be determined by the length and width of hose or pipe 12. Each segment 14a, 14b, and 14c, has a pair of connection ends 16a, 16b, and 16c, respectively. Segments 14a, 14b, and 14c are attached at connection ends 16a, 16b, and 16c to create joints 22a and 22b. When attached, segments 14a, 14b, and 14c are connected such that fluid channels 20a, 20b and 20c are in fluid communication with each other.

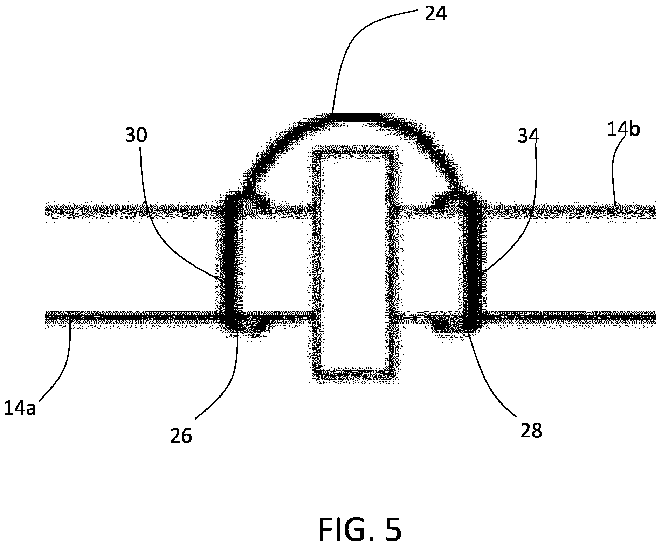

Referring to **FIG.** 5, an elongate tether 24 has a first end 26 and a second end 28. Elongate tether 24 may be a synthetic rope or may be made of any other suitable material known to a person skilled in the art. Elongate tether 24 should have a tensile strength that can withstand the forces applied to it in the event of a disconnect. It will be understood that the tensile strength required will be different depending upon the amount of pressure of fluid within hose or pipe 12. A person of skill will be able to calculate the tensile strength required based upon the amount of pressure of fluid within hose or pipe 12. Elongate tether 24 is relatively short in length with a preferred length of 30 to 64 inches ( 1 inch = 2.54 cm). In one embodiment, elongate tether is 34.5 inches in length. Referring to **FIG. 1****,** this short length helps to limit movement of segments 14a, 14b, and 14c of hose or pipe 12 away from each other. In addition, the short length provides greater strength to elongate tether 24. It will be understood by a person skilled in the art that different lengths of elongate tether 24 may be used.

Referring to **FIG. 1****,** elongate tethers 24 are positioned across each joint 22a and 22b and act to hold adjacent segments 14a and 14b or 14b and 14c in close proximity to each other in the event of a disconnect. This helps to limit movement during a disconnect and help to reduce or prevent damage or injury due to the chaotic motion of disconnected segments. In the embodiment shown, first end 26a of elongate tether 24a is attached to one of the segments 14a adjacent joint 22a and second end 28a of elongate tether 24a is attached to adjacent segment 14b adjacent joint 22a. A second elongate tether 24b is positioned across joint 22b. First end 26b of elongate tether 24b is attached to one of the segments 14b adjacent joint 22b and second end 28b of elongate tether 24b is attached to adjacent segment 14c adjacent joint 22b.

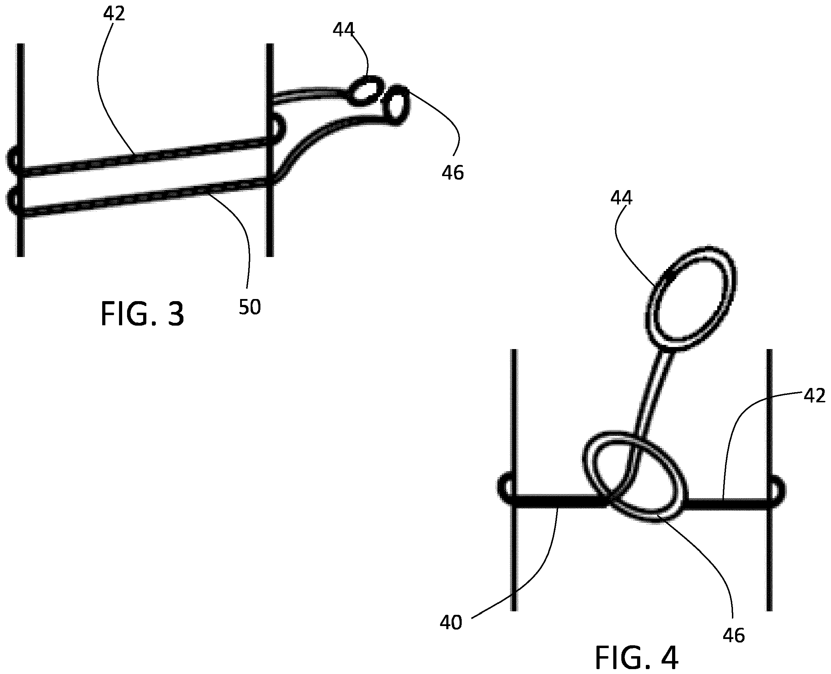

Referring to **FIG. 5**, first end 26 of elongate tether 24 is attached to segment 14a of hose or pipe 12 adjacent joint 22a. In the embodiment shown, first end 26 forms a first loop 30. First end 26 is attached to hose or pipe 12 by passing second end 28 of elongated tether 24 through first loop 30, as shown in **FIG. 4****,** to create loop 30 that is slid over connection end 16a and placed around hose or pipe 12. It will be understood by a person skilled in the art that first end 26 of elongate tether 24 may be attached in any other way known to a person skilled in the art. After first end 26 of elongate tether 24 is attached to hose or pipe 12, second end 28 of elongate tether 24 is attached to segment 14b of hose or pipe 12 adjacent joint 22a. In the embodiment shown, second end 28 is a second loop 34. Second end 28 may be attached to segment 14b of hose or pipe 12 by sliding second loop 34 over connection end 16b and placing it around hose or pipe 12. In the embodiment shown, second loop 34 is an adjustable eye loop that can be tightened or loosening by sliding elongate tether 24 through a binding, not shown. It will be understood by a person skilled in the art that second loop 34 may be adjusted in any other fashion known to a person skilled in the art. Other methods of attaching first loop 30 and second loop 34 will be known to persons skilled in the art. As an example only, second end 28 is attached to segment 14b of hose or pipe 12 by wrapping second loop 34 around hose or pipe 12 and connecting second loop 34 back to elongate tether 24. This effectively creates a loop around hose or pipe 12. Connecting second loop 34 back to elongate tether 24 may be done using a carabiner, a tie or any other type of connector known to a person skilled in the art. It will be understood by a person skilled in the art that second end 28 of elongate tether 24 may be attached in any other way known to a person skilled in the art. Second end 28 is tightened around hose or pipe 12.

To help limit movement of segments 14a, 14b, and 14c of hose or pipe 12 away from each other, slack is removed from elongate tether 24 after connection between adjacent segments of hose are made. This is accomplished by loosening first loop 30 and/or second loop 34 and moving them away from each other. After slack has been removed, it is preferable that first loop 30 and second loop 34 be retightened around hose or pipe 12. In the embodiment shown, first end 26 and second end 28 of elongate tether 24 are positioned substantially equidistant from joint 22a which is created when segments 14a and 14b are connected together.

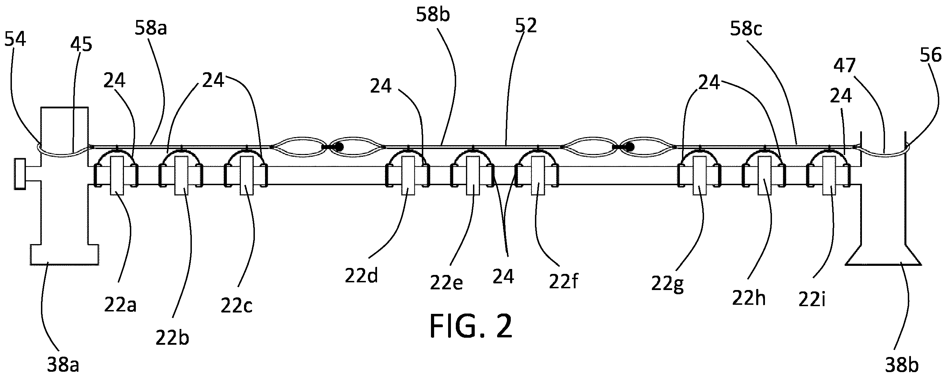

Referring to **FIG. 1****,** a zipper line 52 is provided to create redundancy in control measures. Zipper line 52 has a first end 54 connected to a first anchoring structure 38a and a second end 56 connected to a second anchoring structure 38b. In the embodiment shown in **FIG. 3**, zipper line 52 is anchored using a basket choke 50. In the embodiment shown, basket choke 50 is created using a second elongate tether or zipper line 42 that has a first loop 44 and a second loop 46. Second elongate tether or zipper line 42 is wrapped twice around anchoring structure 38. First loop 44 and second loop 46 are attached to zipper line 52 through the use of a connector, not shown. Connector may be a carabiner, or any other suitable connector known to a person skilled in the art. In the embodiment shown in **FIG. 4****,** zipper line 52 is anchored using a choke hitch 40. In the embodiment shown, choke hitch 40 is created using a second elongate tether or zipper line 42 that has a first loop 44 and a second loop 46. Second elongate tether or zipper line 42 is wrapped around anchoring structure 36 and first loop 44 is passed through second loop 46 to create choke hitch 40. First loop 44 of second elongate tether 42 is attached to elongate tether 24 through the use of a connector, not shown. Connector may be a carabiner, or any other suitable connector known to a person skilled in the art. In the embodiment shown in **FIG. 1** and **FIG. 2**, first end 54 and second end 56 have loops 45 and 47 that are connected to first anchoring structure 38a and second anchoring structure 38b. Simple loops 45 and 47 may be used where anchoring structures 38a and 38b allow for this simple type of attachment, however in most cases it is more practical to use a basket choke or choke hitch.

Referring to **FIG. 1****,** zipper line 52 is attachable to each elongate tether 24a and 24b attached to segments 14a, 14b, and 14c of hose or pipe 12. Zipper line 52 may be attached to each elongate tether 24 by carabiner, tie, knot, or any other suitable mechanism known to a person skilled in the art. It will be understood that zipper line 52 may be positioned above or below pipe 12. In the embodiment shown in **FIG. 1****,** zipper line 52 may be a single line extending the entire distance between first anchoring structure 38a and second anchoring structure 38b. In the embodiment shown in **FIG. 2****,** zipper line is made up of three zipper line segments 58a, 58b, and 58c. It will be understood by a person skilled in the art that any number of segments may be used. Using shorter zipper line segments can allow zipper line 52 to be tauter, which results in greater control during the disconnect of segments of hose or pipe 12.

In the embodiment shown in **FIG. 2****,** zipper line segments 58a, 58b, and 58c may be connected in end to end relation to create a continuous zipper line 52 using carabiners, clevis, or any other method known to a person skilled in the art. Zipper line segment 58a is attached to first anchoring structure 38a and zipper line segment 58b. Zipper line segment 58b is attached to zipper line segments 58a and 58c. Zipper line segment 58c is attached to zipper line segment 58b and second anchoring structure 38b. Zipper line segment 58a is connected to elongate tethers 24 positioned across joints 22a, 22b, and 22c. Zipper line segment 58b is connected to elongate tethers 24 positioned across joints 22d, 22e, and 22f and zipper line segment 58c is connected to elongate tethers 24 positioned across joints 22g, 22h, and 22i.

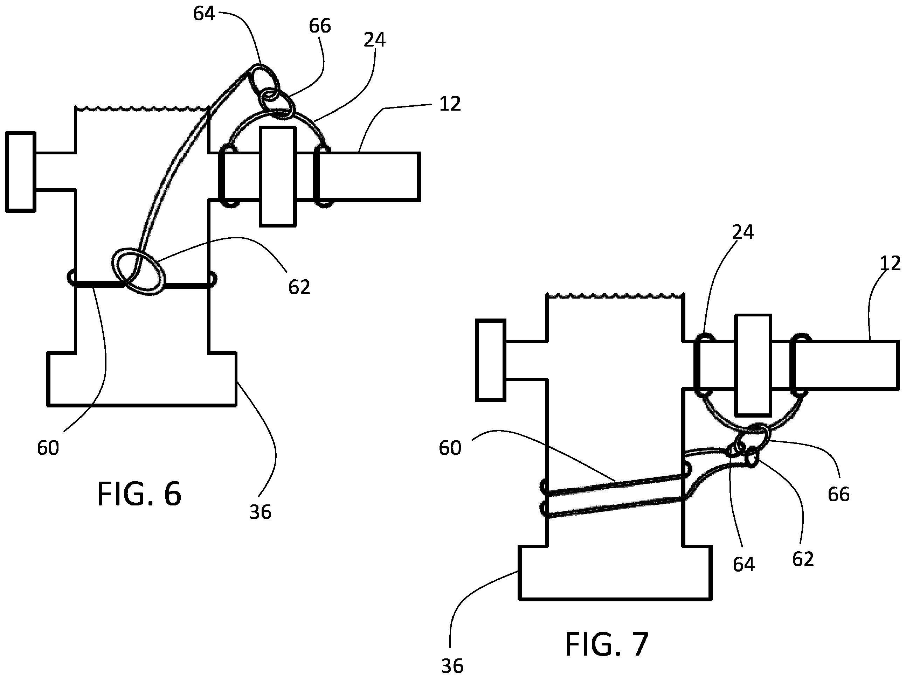

In addition to anchoring zipper line 52 to anchoring structures 38a and 38b, at least one of elongate tethers 24 is also anchored to anchoring structures 38a or 38b. Elongate tethers 24 may also be attached to each other to provide additional control in the event of a hose or pipe disconnect. In the embodiment shown in **FIG. 6****,** elongate tether 24 is anchored using a choke hitch. In the embodiment shown, choke hitch is created using a second elongate tether 60 that has a first loop 62 and a second loop 64. Second elongate tether 60 is wrapped around anchoring structure 36 and first loop 62 is passed through second loop 64 to create choke hitch. First loop 62 of second elongate tether 60 is attached to elongate tether 24 through the use of a connector 66. Connector 66 may be a carabiner, or any other suitable connector known to a person skilled in the art. In the embodiment shown in **FIG. 7****,** elongate tether 24 is anchored using a basket choke. In the embodiment shown, basket choke is created using a second elongate tether 60 that has a first loop 62 and a second loop 64. Second elongate tether 60 is wrapped twice around anchoring structure 38. First loop 62 and second loop 64 are attached to elongate tether 24 through the use of a connector 66. Connector 66 may be a carabiner, or any other suitable connector known to a person skilled in the art.

Any use herein of any terms describing an interaction between elements is not meant to limit the interaction to direct interaction between the subject elements, and may also include indirect interaction between the elements such as through secondary or intermediary structure unless specifically stated otherwise.

In this patent document, the word "comprising" is used in its non-limiting sense to mean that items following the word are included, but items not specifically mentioned are not excluded. A reference to an element by the indefinite article "a" does not exclude the possibility that more than one of the element is present, unless the context clearly requires that there be one and only one of the elements.

It will be apparent that changes may be made to the illustrative embodiments, while falling within the scope of the invention. As such, the scope of the following claims should not be limited by the preferred embodiments set forth in the examples and drawings described above, but should be given the broadest interpretation consistent with the description as a whole.

## Claims

1. A method of controlling hoses and pipes (12) comprising the steps of:
providing a hose or pipe (12) having at least three segments (14a, 14b, 14c), the at least three segments (14a, 14b, 14c) each having a pair of connection ends (16a, 16b, 16c) and a hollow body having a fluid channel (20a, 20b, 20c), the at least three segments (14a, 14b, 14c) being attached by the pair of connection ends (16a, 16b, 16c) to create a joint (22a, 22b) such that the fluid channels (20a, 20b, 20c) of each of the at least three segments (14a, 14b, 14c) are in fluid communication;
positioning an elongate tether (24) across each of the joints (22a, 22b), each of the elongate tethers (24) having a first end (26) and a second end (28), the first end (26) of the elongate tether (24) being attached to one of the segments (14a, 14b, 14c) adjacent the joint (22a, 22b) and the second end (28) of the elongate tether (24) being attached to an adjacent segment (14a, 14b, 14c) adjacent the joint (22a, 22b), anchoring at least one of the at least one elongate tethers (24) to a first anchoring structure (38a) using a further elongate tether (60), the further elongate tether (60) being attached to at least one elongate tether (24) and the first anchoring structure (38a); and
providing a zipper line (52), the zipper line (52) having a first end (54) connected to the first anchoring structure (38a) and a second end (56) connected to a second anchoring structure (38b), the zipper line (52) being attachable to each of the elongate tethers (24) attached to the at least three segments (14a, 14b, 14c),
the method **characterized by** the zipper line (52) being connected to the first anchoring structure (38a) independently of the further elongate tether (60) connected to the first anchoring structure (38a).

2. The method of claim 1 wherein the zipper line (52) is attached to each of the elongate tethers (24) by carabiners (66).

3. The method of claim 1 wherein the zipper line (52) is made up of at least two zipper line segments (58a, 58b, 58c).

4. The method of claim 3 wherein the at least two zipper line segments (58a, 58b, 58c) are connected together in an end to end relation.

5. The method of claim 4 wherein the at least two zipper line segments (58a, 58b, 58c) have a first end (54) connected to one of the elongate tethers (24) and a second end (56) connected to either the first anchoring structure (38a), the second anchoring structure (38b) or a different elongate tether (24) positioned on the hose or pipe (12).

6. The method of claim 1 wherein the first end (26) of each of the elongate tethers (24) and the second end (28) of each of the elongate tethers (24) are positioned equidistant from the joint (22a, 22b) which the elongate tether (24) crosses.

7. The method of claim 1 wherein the first end (26) of each of the elongate tethers (24) has a first loop (30).

8. The method of claim 7 wherein the first end (26) of the elongate tether (24) is attached to the hose or pipe (12) by passing the second end (28) of the elongate tether (24) through the first loop (30) to create a tightenable loop around the hose or pipe (12).

9. The method of claim 1 wherein the second end (28) of the elongate tether (24) has a second loop (34).

10. The method of claim 9 wherein the second loop (34) is an adjustable eye loop.

11. The method of claim 9 wherein the second loop (34) is attached to the hose or pipe (12) by wrapping the second loop (34) around the hose or pipe (12) and connecting the second loop (34) back to the elongate tether (24).

12. The method of claim 1 wherein the zipper line (52) is connected to the first anchoring structure (38a) and the second anchoring structure (38b) by a choke hitch or a basket choke.

13. The method of claim 1 wherein the further elongate tether (60) is connected to the first anchoring structure (38a) using a choke hitch or a basket choke.

14. The method of claim 1 wherein a second further elongate tether (60) is connected to the second anchoring structure (38b), the second further elongate tether (60) anchoring at least one of the at least one elongate tethers (24) to the second anchoring structure (38b).

15. The method of claim 14 wherein the second further elongate tether (60) is connected to the second anchoring structure (38b) using a choke hitch or a basket choke.

## Patentansprüche

1. Verfahren zur Steuerung von Schläuchen und Rohren (12), das die folgenden Schritte umfasst:
Bereitstellen eines Schlauchs oder Rohrs (12) mit mindestens drei Segmenten (14a, 14b, 14c), wobei die mindestens drei Segmente (14a, 14b, 14c) jeweils ein Paar von Verbindungsenden (16a, 16b, 16c) und einen Hohlkörper mit einem Fluidkanal (20a, 20b, 20c) aufweisen, wobei die mindestens drei Segmente (14a, 14b, 14c) durch das Paar von Verbindungsenden (16a, 16b, 16c) verbunden sind, um eine Anschlussstelle (22a, 22b) zu bilden, so dass die Fluidkanäle (20a, 20b, 20c) jedes der mindestens drei Segmente (14a, 14b, 14c) in Fluidverbindung stehen;
Positionieren eines länglichen Haltegurts (24) quer über jede der Anschlussstellen (22a, 22b), wobei jeder der länglichen Haltegurte (24) ein erstes Ende (26) und ein zweites Ende (28) aufweist, wobei das erste Ende (26) des länglichen Haltegurts (24) an einem der Segmente (14a, 14b, 14c) neben der Anschlussstelle (22a, 22b) angebracht wird und das zweite Ende (28) des länglichen Haltegurts (24) an einem benachbarten Segment (14a, 14b, 14c) neben der Anschlussstelle (22a, 22b) angebracht wird, Verankern mindestens eines der mindestens einen länglichen Haltegurte (24) an einer ersten Verankerungsstruktur (38a) unter Verwendung eines weiteren länglichen Haltegurts (60), wobei der weitere längliche Haltegurt (60) an mindestens einem länglichen Haltegurt (24) und der ersten Verankerungsstruktur (38a) angebracht wird; und
Bereitstellen einer Reißverschlussleiste (52), wobei die Reißverschlussleiste (52) ein erstes Ende (54), das mit der ersten Verankerungsstruktur (38a) verbunden ist, und ein zweites Ende (56), das mit einer zweiten Verankerungsstruktur (38b) verbunden ist, aufweist, wobei die Reißverschlussleiste (52) an jedem der länglichen Haltegurte (24) anbringbar ist, die an den mindestens drei Segmenten (14a, 14b, 14c) angebracht sind,
wobei das Verfahren **dadurch gekennzeichnet ist, dass** die Reißverschlussleiste (52) unabhängig von dem mit der ersten Verankerungsstruktur (38a) verbundenen weiteren länglichen Haltegurt (60) mit der ersten Verankerungsstruktur (38a) verbunden wird.

2. Verfahren nach Anspruch 1, wobei die Reißverschlussleiste (52) an jedem der länglichen Haltegurte (24) durch Karabiner (66) angebracht wird.

3. Verfahren nach Anspruch 1, wobei die Reißverschlussleiste (52) aus mindestens zwei Reißverschlussleistensegmenten (58a, 58b, 58c) besteht.

4. Verfahren nach Anspruch 3, wobei die mindestens zwei Reißverschlussleistensegmente (58a, 58b, 58c) in einer Ende-zu-Ende-Beziehung miteinander verbunden sind.

5. Verfahren nach Anspruch 4, wobei die mindestens zwei Reißverschlussleistensegmente (58a, 58b, 58c) ein erstes Ende (54), das mit einem der länglichen Haltegurte (24) verbunden ist, und ein zweites Ende (56), das entweder mit der ersten Verankerungsstruktur (38a), der zweiten Verankerungsstruktur (38b) oder einem anderen länglichen Haltegurt (24) verbunden ist, der auf dem Schlauch oder Rohr (12) positioniert ist, aufweisen.

6. Verfahren nach Anspruch 1, wobei das erste Ende (26) jedes der länglichen Haltegurte (24) und das zweite Ende (28) jedes der länglichen Haltegurte (24) äquidistant von der Anschlussstelle (22a, 22b) positioniert sind, die der längliche Haltegurt (24) durchquert.

7. Verfahren nach Anspruch 1, wobei das erste Ende (26) jedes der länglichen Haltegurte (24) eine erste Schlaufe (30) aufweist.

8. Verfahren nach Anspruch 7, wobei das erste Ende (26) des länglichen Haltegurts (24) an dem Schlauch oder Rohr (12) angebracht wird, indem das zweite Ende (28) des länglichen Haltegurts (24) durch die erste Schlaufe (30) geführt wird, um eine festziehbare Schlaufe um den Schlauch oder das Rohr (12) zu erzeugen.

9. Verfahren nach Anspruch 1, wobei das zweite Ende (28) des länglichen Haltegurts (24) eine zweite Schlaufe (34) aufweist.

10. Verfahren nach Anspruch 9, wobei die zweite Schlaufe (34) eine einstellbare Ösenschlaufe ist.

11. Verfahren nach Anspruch 9, wobei die zweite Schlaufe (34) an dem Schlauch oder Rohr (12) angebracht wird, indem die zweite Schlaufe (34) um den Schlauch oder das Rohr (12) gewickelt und die zweite Schlaufe (34) wieder mit dem länglichen Haltegurt (24) verbunden wird.

12. Verfahren nach Anspruch 1, wobei die Reißverschlussleiste (52) mit der ersten Verankerungsstruktur (38a) und der zweiten Verankerungsstruktur (38b) durch einen Schnürgang oder einen Hängegang verbunden wird.

13. Verfahren nach Anspruch 1, wobei der weitere längliche Haltegurt (60) mit der ersten Verankerungsstruktur (38a) über einen Schnürgang oder einen Hängegang verbunden wird.

14. Verfahren nach Anspruch 1, wobei ein zweiter weiterer länglicher Haltegurt (60) mit der zweiten Verankerungsstruktur (38b) verbunden wird, wobei der zweite weitere längliche Haltegurt (60) mindestens einen der mindestens einen länglichen Haltegurte (24) an der zweiten Verankerungsstruktur (38b) verankert.

15. Verfahren nach Anspruch 14, wobei der zweite weitere längliche Haltegurt (60) mit der zweiten Verankerungsstruktur (38b) unter Verwendung eines Schnürgangs oder eines Hängegangs verbunden wird.

## Revendications

1. Procédé de commande de flexibles et de tuyaux (12), comprenant les étapes de :
la fourniture d'un flexible ou tuyau (12) ayant au moins trois segments (14a, 14b, 14c), les au moins trois segments (14a, 14b, 14c) ayant chacun une paire d'extrémités de raccordement (16a, 16b, 16c) et un corps creux ayant un canal de fluide (20a, 20b, 20c), les au moins trois segments (14a, 14b, 14c) étant liés par la paire d'extrémités de raccordement (16a, 16b, 16c) pour créer un joint (22a, 22b) tel que les canaux de fluide (20a, 20b, 20c) de chacun des au moins trois segments (14a, 14b, 14c) sont en communication fluidique ;
le positionnement d'une attache allongée (24) au-dessus de chacun des joints (22a, 22b), chacune des attaches allongées (24) ayant une première extrémité (26) et une seconde extrémité (28), la première extrémité (26) de l'attache allongée (24) étant liée à un des segments (14a, 14b, 14c) adjacent au joint (22a, 22b) et la seconde extrémité (28) de l'attache allongée (24) étant liée à un segment adjacent (14a, 14b, 14c) adjacent au joint (22a, 22b), ancrant au moins une de l'au moins une attache allongée (24) à une première structure d'ancrage (38a) en utilisant une attache allongée supplémentaire (60), l'attache allongée supplémentaire (60) étant liée à au moins une attache allongée (24) et à la première structure d'ancrage (38a) ; et
la fourniture d'une ligne de fermeture à glissière (52), la ligne de fermeture à glissière (52) ayant une première extrémité (54) reliée à la première structure d'ancrage (38a) et une seconde extrémité (56) reliée à une seconde structure d'ancrage (38b), la ligne de fermeture à glissière (52) étant liable à chacune des attaches allongées (24) liées aux au moins trois segments (14a, 14b, 14c),
le procédé étant **caractérisé en ce que** la ligne de fermeture à glissière (52) est reliée à la première structure d'ancrage (38a) indépendamment de l'attache allongée supplémentaire (60) reliée à la première structure d'ancrage (38a).

2. Procédé de la revendication 1, dans lequel la ligne de fermeture à glissière (52) est liée à chacune des attaches allongées (24) par des mousquetons (66).

3. Procédé de la revendication 1, dans lequel la ligne de fermeture à glissière (52) est composée d'au moins deux segments de ligne de fermeture à glissière (58a, 58b, 58c).

4. Procédé de la revendication 3, dans lequel les au moins deux segments de ligne de fermeture à glissière (58a, 58b, 58c) sont reliés ensemble en une relation bout-à-bout.

5. Procédé de la revendication 4, dans lequel les au moins deux segments de ligne de fermeture à glissière (58a, 58b, 58c) ont une première extrémité (54) reliée à une des attaches allongées (24) et une seconde extrémité (56) reliée à la première structure d'ancrage (38a), à la seconde structure d'ancrage (38b) ou à une attache allongée différente (24) positionnée sur le flexible ou tuyau (12).

6. Procédé de la revendication 1, dans lequel la première extrémité (26) de chacune des attaches allongées (24) et la seconde extrémité (28) de chacune des attaches allongées (24) sont positionnées de façon équidistante du joint (22a, 22b) que l'attache allongée (24) croise.

7. Procédé de la revendication 1, dans lequel la première extrémité (26) de chacune des attaches allongées (24) a une première boucle (30).

8. Procédé de la revendication 7, dans lequel la première extrémité (26) de l'attache allongée (24) est liée au flexible ou tuyau (12) en faisant passer la seconde extrémité (28) de l'attache allongée (24) à travers la première boucle (30) pour créer une boucle resserrable autour du flexible ou tuyau (12).

9. Procédé de la revendication 1, dans lequel la seconde extrémité (28) de l'attache allongée (24) a une seconde boucle (34).

10. Procédé de la revendication 9, dans lequel la seconde boucle (34) est une boucle-œil ajustable.

11. Procédé de la revendication 9, dans lequel la seconde boucle (34) est liée au flexible ou tuyau (12) en plaçant la seconde boucle (34) autour du flexible ou tuyau (12) et en reliant à nouveau la seconde boucle (34) à l'attache allongée (24).

12. Procédé de la revendication 1, dans lequel la ligne de fermeture à glissière (52) est reliée à la première structure d'ancrage (38a) et la seconde structure d'ancrage (38b) par une attache à étranglement ou une attache en panier.

13. Procédé de la revendication 1, dans lequel l'attache allongée supplémentaire (60) est reliée à la première structure d'ancrage (38a) en utilisant une attache à étranglement ou une attache en panier.

14. Procédé de la revendication 1, dans lequel une seconde attache allongée supplémentaire (60) est reliée à la seconde structure d'ancrage (38b), la seconde attache allongée supplémentaire (60) ancrant au moins une de l'au moins une attache allongée (24) à la seconde structure d'ancrage (38b).

15. Procédé de la revendication 14, dans lequel la seconde attache allongée supplémentaire (60) est reliée à la seconde structure d'ancrage (38b) en utilisant une attache à étranglement ou une attache en panier.
